# EUROPÄISCHE PATENTSCHRIFT

(11) **EP 3 498 359 B1**
(45) Veröffentlichungstag und Bekanntmachung des Hinweises auf die Patenterteilung: **24.02.2021**
(21) Anmeldenummer: 18206276.0
(22) Anmeldetag: 14.11.2018
(51) Int. Cl.: B01D 35/153, B01D 35/16, B01D 29/21, F02M 37/22, F01M 11/03

(54) **FILTERELEMENT UND ZUGEHÖRIGE FILTEREINRICHTUNG**
FILTER ELEMENT AND RELATED FILTER DEVICE
ÉLÉMENT FILTRANT ET DISPOSITIF FILTRANT CORRESPONDANT

(30) Priorität: 12.12.2017 DE 102017222526
(43) Veröffentlichungstag der Anmeldung: 19.06.2019
(73) Patentinhaber: Mahle International GmbH, 70376 Stuttgart (DE)
(72) Erfinder: HENSINGER, Heiko, 70599 Stuttgart (DE)
(74) Vertreter: BRP Renaud & Partner mbB Rechtsanwälte Patentanwälte Steuerberater

(56) Entgegenhaltungen:
- DE-A1-102013 209 662
- DE-A1-102015 222 359
- DE-U1-202011 104 691
- US-A1- 2009 090 668

## Beschreibung

Die vorliegende Erfindung betrifft ein Filterelement mit einem ringförmigen Filterkörper aus einem Filtermaterial, das einen zylindrischen Innenraum umgibt, gemäß dem Oberbegriff des Anspruchs 1. Die Erfindung betrifft außerdem eine Filtereinrichtung mit zumindest einem solchen Filterelement.

Aus der EP 2 364 763 B1 ist ein gattungsgemäßes Filterelement, insbesondere ein Luftfilter für eine Frischluftanlage eines Fahrzeugs und/oder einer Brennkraftmaschine bekannt, welches einen ringförmigen Filterkörper aus einem Filtermaterial aufweist. Ebenfalls vorgesehen sind eine Innenzarge, an der sich der Filterkörper radial innen abstützt sowie eine obere Endscheibe, die axial am Filterkörper angeordnet ist und eine zentrale Scheibenöffnung aufweist.

Aus der DE 20 2005 003 047 U1 ist ein Flüssigfilter mit einem auswechselbarem und ein Filtermedium aufweisenden Filtereinsatz bekannt, wobei der Flüssigfilter ein Filterumgehungsventil aufweist, das bei Überschreitung eines vorbestimmten Flüssigkeitsdrucks öffnet und einen Flüssigkeitsstrom von der Roh- zur Reinseite des Filters unter Umgehung des Filtermediums ermöglicht. Das Filterumgehungsventil besitzt dabei einen beweglichen Ventilkörper sowie eine diesem zugeordnete Dichtfläche, wobei letztere am auswechselbaren Filtereinsatz angeordnet ist und eine Ventilöffnung umgibt. Dem Ventilkörper ist darüber hinaus ein Vorsprung zugeordnet, der sich durch die Ventilöffnung erstreckt. Hierdurch soll eine verbesserte Anströmung des Filterumgehungsventils erreicht werden können.

Aus der DE 10 2015 222 359 A1 ist ein Baukastensystem für ein Ringfilterelement mit zumindest zwei Faltensternen, zumindest einer ersten Endscheibe mit einem exzentrisch und axial abstehenden Pin und einer ersten Eingriffskontur, zumindest einer zweiten Endscheibe, zumindest einer Innenzarge mit zumindest einem radial nach innen von der Innenzarge abstehenden Führungselement mit einem jeweils gegenüber längsendseitig angeordneten ersten und zweiten Eingriffselement, wobei das Ringfilterelement derart zusammenbaubar ist, dass das erste Eingriffselement oder das zweite Eingriffselement in die erste Eingriffskontur eingreift und wobei in beiden Fällen der Pin drehwinkelgleich zum Führungselement ausgerichtet ist.

Filtereinrichtungen für Brennkraftmaschinen bestehen in der Regel aus einem Filtergehäuse und einem im Servicefall austauschbaren Filterelement. Gerade bei komplex ausgebildeten Filterelementen, kann es beim Verbau des Filterelements im Gehäuse zu Problemen kommen, da das Filterelement im Gehäuse nicht ordnungsgemäß geführt wird. Insbesondere kann sich beim Einbau eine Schiefstellung des Filterelements relativ zum Funktionsträger bzw. zum Filtergehäuse ergeben, was ein Verkanten und unter Umständen auch einen Materialbruch am Filterelement oder am Funktionsträger bzw. am Filtergehäuse bewirken kann.

Die vorliegende Erfindung beschäftigt sich daher mit dem Problem, für ein Filterelement der gattungsgemäßen Art eine verbesserte oder zumindest eine alternative Ausführungsform anzugeben, die insbesondere die aus dem Stand der Technik bekannten Nachteile überwindet und insbesondere einen vereinfachten Einbau in ein Filtergehäuse einer Filtereinrichtung ermöglicht.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, an einem an sich bekannten Filterelement im Bereich einer oberen Endscheibe oder einer Innenzarge im Bereich der oberen Endscheibe spezielle Zentrierelemente vorzusehen, die eine Zwangszentrierung und damit Zwangsführung des Filterelements beim Einbau in ein Filtergehäuse einer Filtereinrichtung bewirken und dadurch ein Verkanten des Filterelements relativ zu einem Filtergehäuse bzw. einem Steigrohr in dem Filtergehäuse verhindern, wodurch insbesondere Beschädigungen an dem Steigrohr bzw. am Filterelement zuverlässig vermieden werden können. Um dabei die Montage und die Herstellung zusätzlich vereinfachen zu können, ist zudem noch ein Positioniersteg im Bereich der oberen Endscheibe und/oder an der Innenzarge vorgesehen, der eine Drehausrichtung des Filterelements und damit ein zuverlässiges Einführen eines Pins des Filterelements in einen zugehörigen Leerlaufkanal der Filtereinrichtung bewirkt. Das erfindungsgemäße Filterelement, welches bspw. ein Luftfilter, ein Ölfilter oder ein Kraftstofffilter eines Fahrzeugs und/oder einer Brennkraftmaschine sein kann, weist dabei einen ringförmigen Filterkörper aus einem Filtermaterial auf, das einen zylindrischen Innenraum umgibt. Ebenfalls vorgesehen sind eine Innenzarge, an der sich der Filterkörper radial innen abstützt sowie eine obere Endscheibe, die axial am Filterkörper angeordnet ist und die eine zentrale erste Scheibenöffnung besitzt. Zudem besitzt das Filterelement eine untere Endscheibe, die ebenfalls axial am Filterkörper angeordnet ist und die ebenfalls eine zentrale Scheibenöffnung aufweist, die im weiteren als zweite Scheibenöffnung bezeichnet wird, und an welcher ein exzentrisch angeordneter oder axial abstehender Pin zum Verschließen eines Leerlaufkanals angeordnet ist. Erfindungsgemäß sind nun mehrere in Umfangsrichtung um die erste Scheibenöffnung verteilt angeordnete und axial in den Innenraum abstehende Zentrierelemente vorgesehen, deren, der oberen Endscheibe abgewandte Längsenden derart abgeschrägt sind, dass eine axiale Länge der Zentrierelemente radial innen kleiner ist als radial außen. Die Zentrierelemente besitzen also eine Schräge. Zudem ist ein Positioniersteg vorgesehen, der an der oberen Endscheibe in Umfangsrichtung zwischen zwei Zentrierelementen angeordnet ist und der parallel zu diesen verläuft. Dies bietet den großen konstruktiven Vorteil, dass sowohl der zur Drehausrichtung des Ringfilterelements erforderliche Positioniersteg als auch die für den einfachen Einbau verantwortlichen Zentrierelemente im Bereich der oberen Endscheibe zusammengefasst werden können, wodurch die Herstellung vereinfacht werden kann. Dies ist insbesondere dann möglich, sofern sowohl die Zentrierelemente als auch das Positionierelement im Kunststoffspritzgussverfahren hergestellt werden, da in diesem Fall ein gemeinsames Herstellen bspw. der oberen Endscheibe und/oder der Innenzarge zusammen mit den Zentrierelementen bzw. dem Positioniersteg ermöglicht wird. Alternativ können die Zentrierelemente und/oder der Positioniersteg an einem separaten Bauteil innerhalb der Baugruppe ausgeführt werden. Denkbar ist insbesondere, dass die Zentrierelemente und/oder der Positioniersteg als separate Bauteile ausgebildet sind, welche mit der Endscheibe und/oder der Innenzarge verbunden, insbesondere verclipst oder verklebt, sind. Insgesamt können mit dem erfindungsgemäßen Filterelement somit ein Verkanten desselben beim Einbau vermieden und damit die Gefahr von Beschädigungen beim Einbau des Filterelements in die Filtereinrichtung zumindest reduziert werden.

Bei einer vorteilhaften Weiterbildung der erfindungsgemäßen Lösung ist der Positioniersteg in Axialrichtung kürzer ausgebildet als die Zentrierelemente. Dies bietet den großen Vorteil, dass zunächst bei einem Einsetzen des Filterelements in ein Filtergehäuse einer Filtereinrichtung ein Zentrieren des Filterelements über die Zentrierelemente erfolgt, bevor der Positioniersteg mit einer, bspw. in einem Steigrohr eines Funktionsträgers angeordneten, Positionierkontur zusammenwirkt. Es wird somit durch die erfindungsgemäß kürzere Ausbildung des Positionierstegs bereits ein Vorausrichten des Filterelements relativ zum Steigrohr bzw. relativ zum Funktionsträger bzw. relativ zum Filtergehäuse erzwungen, wodurch der Einbau vereinfacht werden kann.

Bei einer vorteilhaften Weiterbildung der erfindungsgemäßen Lösung sind zumindest drei, vorzugsweise vier, sechs oder mehr Zentrierelemente vorgesehen. Zumindest drei Zentrierelemente sind dabei erforderlich, um ein zuverlässiges Zentrieren des Filterelements relativ zum Steigrohr bzw. relativ zum Filtergehäuse der Filtereinrichtung zu bewirken. Das Vorsehen von zumindest drei Zentrierelementen bietet dabei die Möglichkeit einer besonders ressourcenschonenden und kosten-/bauraumsparenden Herstellung.

Bei einer vorteilhaften Weiterbildung der erfindungsgemäßen Lösung ist an der oberen Endscheibe des Filterelements ein axial abstehender Stutzen angeordnet, wobei sich zumindest die Zentrierelemente in den Stutzen hinein erstrecken. Dies ermöglicht eine axial längere Ausbildung der Zentrierelemente und dadurch eine axial verbesserte Führung des Filterelements auf einem Steigrohr, da ein derartiges Steigrohr üblicherweise einen Außendurchmesser aufweist, der einem Innendurchmesser der Zentrierelemente im Wesentlichen entspricht, so dass das Filterelement mit seinen Zentrierelementen auf das Steigrohr aufgeschoben und auf diesem geführt werden kann.

Die Erfindung beruht weiter auf dem allgemeinen Gedanken, eine Filtereinrichtung, insbesondere ein Luftfilter, ein Ölfilter oder ein Kraftstofffilter eines Kraftfahrzeugs und/oder einer Brennkraftmaschine anzugeben, mit zumindest einem in den vorherigen Absätzen beschriebenen Filterelement, wobei in einem Filtergehäuse der Filtereinrichtung ein Steigrohr angeordnet ist, welches bspw. als Reinkanal fungiert und welches an einem der oberen Endscheibe zugewandten freien Längsende eine Positionierkontur, beispielsweise in der Form einer kanülenartigen Schräge, aufweist. Ein Innendurchmesser der Zentrierelemente entspricht dabei im Wesentlichen einem Außendurchmesser des Steigrohrs, wodurch die im vorherigen Absatz beschriebene Führungsfunktion realisiert werden kann. Über die Positionierkontur, welche mit dem Positioniersteg des Filterelements zusammenwirkt, kann eine Drehausrichtung des Filterelements relativ zum Filtergehäuse der Filtereinrichtung erzwungen werden, wodurch eine fluchtende Ausrichtung des Pins des Filterelements relativ zu einem Leerlaufkanal im Filtergehäuse vergleichsweise einfach realisierbar ist.

In einer vorteilhaften Weiterbildung der erfindungsgemäßen Filtereinrichtung ist an einer tiefsten Stelle der Positionierkontur eine Axialnut zur Aufnahme des Positionierstegs angeordnet. Durch Verdrehen des Filterelements relativ zum Filtergehäuse gleitet der Positioniersteg des Filterelements entlang der Positionierkontur am Steigrohr, bis der Positioniersteg fluchtend zur Axialnut der Positionierkontur angeordnet ist und in diese eingeführt werden kann. In dieser Stellung, in welcher der Positioniersteg axial fluchtend zur Axialnut ausgebildet ist, ist auch der filterelementseitige Pin in Axialrichtung fluchtend zum filtergehäuseseitigen Leerlaufkanal ausgerichtet, so dass durch ein Axialverschieben des Filterelements relativ zum Filtergehäuse der Pin in den Leerlaufkanal und der Positioniersteg in die Axialnut eingeführt werden können. Selbstverständlich sind rein theoretisch auch andere Positionierkonturen denkbar, bspw. in der Art einer Schraubenlinie, an deren tiefster Stelle die Axialnut angeordnet ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine Ansicht auf ein erfindungsgemäßes Filterelement,
- Fig. 2: eine Schnittdarstellung durch eine erfindungsgemäße Filtereinrichtung bei schräg zu einer Achse der Filtereinrichtung eingesetztem Filterelement,
- Fig. 3: eine Darstellung wie in Fig. 2, jedoch bei parallel bzw. identisch verlaufenden Achsen des Filterelements und der Filtereinrichtung.

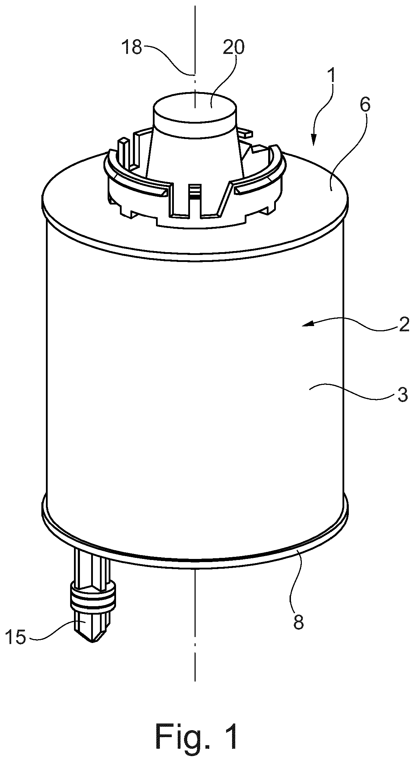

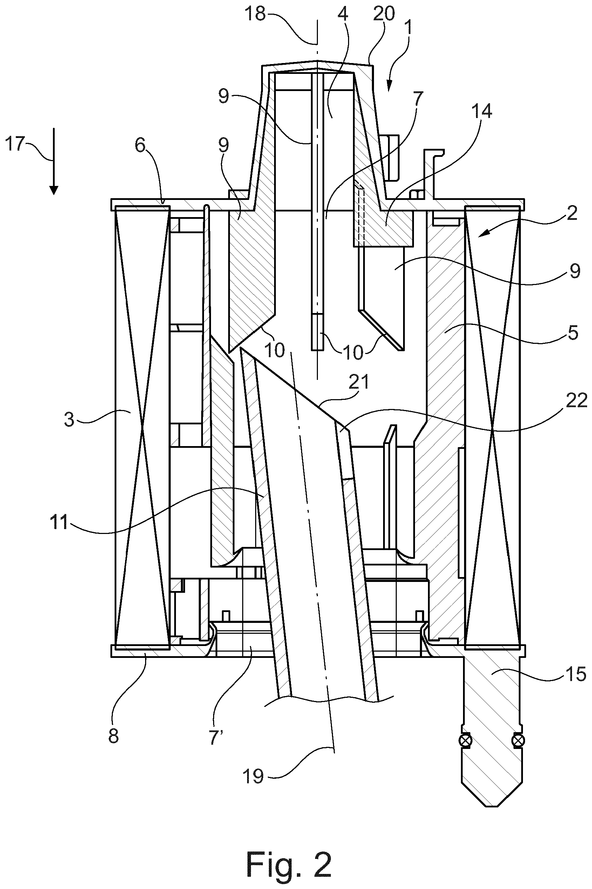

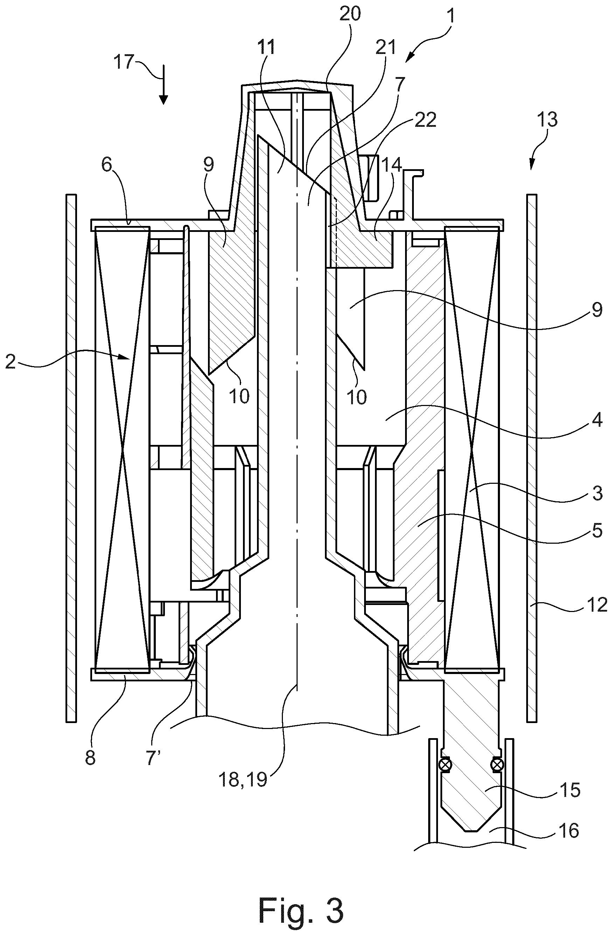

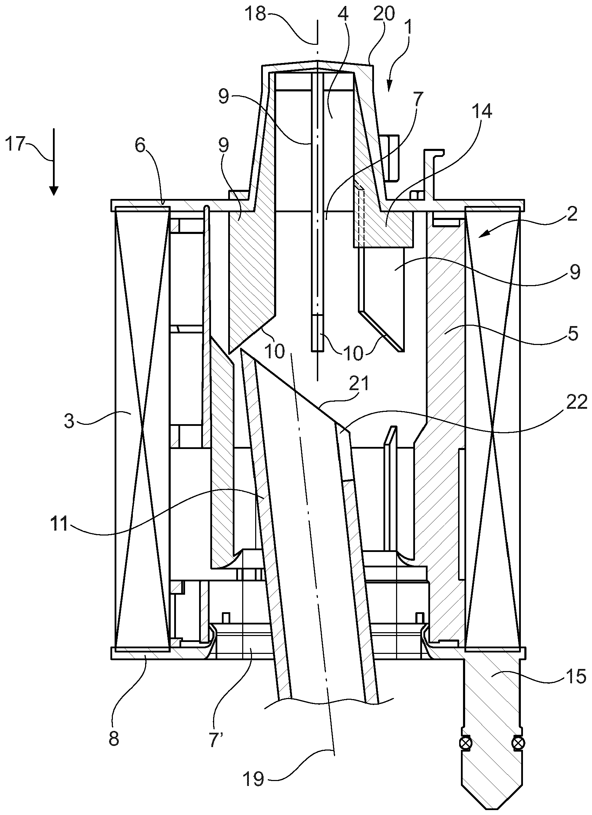

Entsprechend den Fig. 1 bis 3, weist ein erfindungsgemäßes Filterelement 1, welches bspw. als Luftfilter, als Ölfilter oder als Kraftstofffilter eines Fahrzeugs und/oder einer Brennkraftmaschine ausgebildet sein kann, einen ringförmigen Filterkörper 2 aus einem Filtermaterial 3 auf, das einen zylindrischen Innenraum 4 (vgl. insbesondere die Fig. 2 und 3) umgibt. Ebenfalls vorgesehen ist eine Innenzarge 5, an der sich der Filterkörper 2 radial innen abstützt. Nach oben ist das erfindungsgemäße Filterelement 1 in bekannter Weise über eine obere Endscheibe 6 abgeschlossen, die axial am Filterkörper 2 angeordnet ist und eine zentrale erste Scheibenöffnung 7 aufweist. Nach unten in Axialrichtung des (Ring-)filterelements 1 ist der Filterkörper 2 über eine untere Endscheibe 8 abgeschlossen, die eine zentrale zweite Scheibenöffnung 7' aufweist. Erfindungsgemäß sind nun mehrere in Umfangsrichtung um die erste Scheibenöffnung 7 verteilt angeordnete und axial in den Innenraum 4 abstehende Zentrierelemente 9 vorgesehen, deren, der oberen Endscheibe 6 abgewandte Längsenden abgeschrägt sind und dadurch eine Schräge 10 aufweisen, so dass eine axiale Länge der Zentrierelemente 9 radial innen kleiner ist als radial außen. Diese Zentrierelemente 9 mit ihren Schrägen 10 bewirken ein vereinfachtes Aufstecken des Filterelements 1 auf ein Steigrohr 11, welches bspw. an einem nicht näher bezeichneten Funktionsträger in einem Filtergehäuse 12 einer Filtereinrichtung 13 angeordnet ist. Darüber hinaus vorgesehen ist ein Positioniersteg 14, der an der oberen Endscheibe 6 und/oder an der Innenzarge 5 in Umfangsrichtung zwischen zwei benachbarten Zentrierelementen 9 angeordnet ist und parallel zu diesen verläuft. Über den Positioniersteg 14 ist eine Drehausrichtung eines exzentrisch an der unteren Endscheibe 8 angeordneten und axial abstehenden Pins 15 relativ zu einem filtergehäuseseitigen Leerlaufkanal 16 möglich, so dass bei dem erfindungsgemäßen Filterelement 1 sowohl die Zentrierelemente 9 als auch der Positioniersteg 14 an der oberen Endscheibe 6 bzw. an der Innenzarge 5 angeordnet, insbesondere sogar einstückig mit dieser ausgebildet sind und einen Einbau des Filterelements 1 in das Filtergehäuse 12 der Filtereinrichtung 13, bspw. eines Luftfilters, eines Kraftstofffilters oder eines Ölfilters, erleichtern. Betrachtet man die Fig. 2 und 3, so kann man erkennen, dass der Positioniersteg 14 in Axialrichtung 17 kürzer ausgebildet ist als die Zentrierelemente 9, so dass bei einem Einbau des erfindungsgemäßes Filterelements 1 in die Filtereinrichtung 13 zuerst die Positionierelemente 9 ein paralleles bzw. identisches Ausrichten einer Filterelementachse 18 relativ zu einer Steigrohrachse 19 bewirken.

Betrachtet man das erfindungsgemäße Filterelement 1 weiter, so kann man erkennen, dass an der oberen Endscheibe 6 ein axial abstehender Stutzen 20 angeordnet ist, wobei sich zumindest die Zentrierelemente 9 bis in den Stutzen 20 erstrecken. Ebenso kann sich auch der Positioniersteg 14 in den Stutzen 20 erstrecken.

Wie der Fig. 3 zu entnehmen ist, weist die erfindungsgemäße Filtereinrichtung 13 das zuvor beschriebene Filtergehäuse 12 mit dem darin angeordneten Steigrohr 11 auf, das an einem der oberen Endscheibe 6 zugewandten freien Längsende eine Positionierkontur 21 in Form einer Schräge aufweist. Dabei ist selbstverständlich klar, dass die Positionierkontur 21 nicht in der Art einer kanülenartigen Schräge ausgebildet sein muss, sondern auch einen Schraubengang bilden kann. An einer tiefsten Stelle der Positionierkontur 21 ist dabei eine Axialnut 22 zur Aufnahme des Positionierstegs 14 angeordnet.

Ein Innendurchmesser der Zentrierelemente 9 entspricht dabei einem Außendurchmesser des Steigrohrs 11 oder ist geringfügig größer als ein Außendurchmesser des Steigrohrs 11, wodurch eine Führung des Filterelements 1 durch seine Zentrierelemente 9 am Steigrohr 11 erfolgen kann. Insgesamt sind dabei zumindest drei, vier, vorzugsweise sogar sechs oder mehr, Zentrierelemente 9 vorgesehen.

Um die erfindungsgemäße Wirkung des erfindungsgemäßen Filterelements 1 näher erläutern zu können, wird nachfolgend auf den Montagevorgang des Filterelements 1 in der Filtereinrichtung 13 näher eingegangen.

Zur Montage des Filterelements 1 in dem Filtergehäuse 12 der Filtereinrichtung 13 wird dieses zunächst von oben eingesetzt, wobei bei einer zunächst auftretenden Schrägstellung der Filterelementachse 18 zur Steigrohrachse 19 keine Schwierigkeiten wie bislang auftreten, da das Steigrohr 11 mit seiner Positionierkontur 21, insbesondere mit seiner oberen Spitze der Positionierkontur 21 zunächst über die Schrägen 10 der Zentrierelemente 9 oder zumindest an einer Schräge 10 zumindest eines Zentrierelements 9 entlang fährt und dadurch das Filterelement 1 relativ zum Steigrohr 11 ausrichtet. Sobald der Positioniersteg 14 des Filterelements 1 mit der Positionierkontur 21 des Steigrohrs 11 in Kontakt tritt, erfolgt ein Verdrehen und gleichzeitig ein axiales Verstellen des Filterelements 1 im Filtergehäuse 12. Erreicht der Positioniersteg 14 die steigrohrseitige Axialnut 22, ist der Pin 15 fluchtend zum filtergehäuseseitigen Leerlaufkanal 16 ausgerichtet und es erfolgt keine Verdrehung des Filterelements 1 mehr, sondern lediglich ein axiales Verschieben des Filterelements 1 im Filtergehäuse 12 der Filtereinrichtung 13, bei welchem der Pin 15 in den Leerlaufkanal 16 eingeschoben wird und diesen verschließt. Mit den erfindungsgemäßen Zentrierelementen 9 kann somit insbesondere ein Verkanten des Filterelements 1 relativ zum Steigrohr 11 vermieden werden, wodurch sich insbesondere die Gefahr einer Beschädigung, bspw. durch Abbrechen von Teilen, am Filterelement 1 und/oder am Steigrohr 11 verhindern lassen. Die Zentrierelemente 9 mit ihren Schrägen 10 ermöglichen dabei ein vergleichsweise einfaches Zentrieren und Ausrichten des Filterelements 1 relativ zum Filtergehäuse 12 und zugleich eine Führung des Filterelements 1, da ein Innendurchmesser der Zentrierelemente 9 im Wesentlichen einem Außendurchmesser des Steigrohrs 11 entspricht.

Durch die einstückige Ausbildung der oberen Endscheibe 6 und/oder der Innenzarge 5 zusammen mit den Zentrierelementen 9 und/oder dem Positioniersteg 14, insbesondere als einstückiges Kunststoffspritzgussteil, kann auch eine kostengünstige Herstellung ermöglicht werden.

Aus den Fig. 2 und 3 ist zudem zu erkennen, dass sich der Positioniersteg 14 radial weiter nach innen erstreckt als die Zentrierelemente 9, so dass es bei einer Montage des Filterelements 1 im Filtergehäuse 12 der Filtereinrichtung 13 möglich ist, die Zentrierelemente 9 des Filterelements 1 auf einer äußeren Mantelfläche des Steigrohrs 11 zu führen, während der Positioniersteg 14 mit der Positionierkontur 21 zusammenwirkt und in die Axialnut 22 der Positionierkontur 21 eingreifen kann, was den Zentrierelementen 9 nicht möglich ist.

## Patentansprüche

1. Filterelement (1), insbesondere ein Luftfilter, ein Ölfilter oder ein Kraftstofffilter eines Fahrzeugs und/oder einer Brennkraftmaschine,
- mit einem ringförmigen Filterkörper (2) aus einem Filtermaterial (3), das einen zylindrischen Innenraum (4) umgibt,
- mit einer Innenzarge (5), an der sich der Filterkörper (2) radial innen abstützt,
- mit einer oberen Endscheibe (6), die axial am Filterkörper (2) angeordnet ist und eine zentrale erste Scheibenöffnung (7) aufweist,
- mit einer unteren Endscheibe (8), die axial am Filterkörper (2) angeordnet ist und eine zentrale zweite Scheibenöffnung (7') aufweist und an welcher ein exzentrisch angeordneter und axial abstehender Pin (15) zum Verschließen eines Leerlaufkanals (16) angeordnet ist,
**dadurch gekennzeichnet,**
- **dass** mehrere in Umfangsrichtung um die erste Scheibenöffnung (7) verteilt angeordnete und axial in den Innenraum (4) abstehende Zentrierelemente (9) vorgesehen sind, die jeweils eine Schräge (10) aufweisen, wobei eine axiale Länge der Zentrierelemente (9) radial innen kleiner ist als radial außen,
- **dass** ein Positioniersteg (14) vorgesehen ist, der an der oberen Endscheibe (6) in Umfangsrichtung zwischen zwei Zentrierelementen (9) angeordnet ist und der parallel zu diesen verläuft.

2. Filterelement nach Anspruch 1,
**dadurch gekennzeichnet,**
**dass** der Positioniersteg (14) in Axialrichtung (17) kürzer ausgebildet ist, als die Zentrierelemente (9).

3. Filterelement nach Anspruch 1 oder 2,
**dadurch gekennzeichnet,**
**dass** die Endscheibe (6) einstückig mit den Zentrierelementen (9) und/oder dem Positioniersteg (14), insbesondere als einstückiges Kunststoffspritzgussteil, ausgebildet sind.

4. Filterelement nach Anspruch 1 oder 2,
**dadurch gekennzeichnet,**
**dass** das Zentrierelement (9) und/oder der Positioniersteg (14) als separate Bauteile ausgebildet sind, welche mit der Endscheibe (6) verbunden sind.

5. Filterelement nach einem der Ansprüche 1 bis 4,
**dadurch gekennzeichnet,**
**dass** zumindest drei, vorzugsweise vier, sechs oder mehr, Zentrierelemente (9) vorgesehen sind.

6. Filterelement nach einem der Ansprüche 1 bis 5,
**dadurch gekennzeichnet,**
**dass** an der oberen Endscheibe (6) ein axial abstehender Stutzen (20) angeordnet ist, wobei sich zumindest die Zentrierelemente (9) in den Stutzen (20) erstrecken.

7. Filterelement nach Anspruch 6,
**dadurch gekennzeichnet,**
**dass** sich der Positioniersteg (14) in den Stutzen (20) erstreckt.

8. Filterelement nach einem der Ansprüche 1 bis 7,
**dadurch gekennzeichnet,**
**dass** sich der Positioniersteg (14) radial weiter nach innen erstreckt als die Zentrierelemente (9).

9. Filtereinrichtung (13), insbesondere ein Luftfilter, ein Ölfilter oder ein Kraftstofffilter eines Kraftfahrzeugs und/oder einer Brennkraftmaschine,
- mit einem Filterelement (1) nach einem der Ansprüche 1 bis 8,
- mit einem Filtergehäuse (12) und einem darin angeordneten Steigrohr (11), das an einem oberen Längsende eine Positionierkontur (21), insbesondere in Form einer Schräge, aufweist, die mit dem Positioniersteg (14) des Filterelements (1) zusammenwirkt,
- wobei ein Innendurchmesser der Zentrierelemente (9) im Wesentlichen einem Außendurchmesser des Steigrohrs (11) entspricht.

10. Filtereinrichtung nach Anspruch 9,
**dadurch gekennzeichnet,**
**dass** an einer tiefsten Stelle der Positionierkontur (21) eine Axialnut (22) zur Aufnahme des Positioniersteges (14) angeordnet ist.

## Claims

1. Filter element (1), in particular an air filter, an oil filter or a fuel filter of a vehicle and/or an internal combustion engine,
- with an annular filter body (2) made of a filter material (3) which surrounds a cylindrical inner space (4),
- with an inner frame (5) on which the filter body (2) is supported radially on the inside,
- with an upper end disc (6) which is arranged axially on the filter body (2) and has a central first disc opening (7),
- with a lower end disc (8) which is arranged axially on the filter body (2) and has a central, second disc opening (7'), and on which an eccentrically arranged and axially projecting pin (15) for closing an idle channel (16) is arranged,
**characterised in that**
- a plurality of centring elements (9) are provided distributed in the circumferential direction around the first disc opening (7) and projecting axially into the inner space (4), each having a bevel (10), wherein an axial length of the centring elements (9) is smaller radially inside than radially outside,
- **in that** a positioning web (14) is provided which is arranged on the upper end disc (6) in the circumferential direction between two centring elements (9) and which runs parallel to them.

2. Filter element according to claim 1,
**characterised in that**
the positioning web (14) is made shorter in the axial direction (17) than the centring elements (9).

3. Filter element according to claim 1 or 2,
**characterised in that**
the end disc (6) is designed in one piece with the centring elements (9) and/or the positioning web (14), in particular as a one-piece plastic injection-moulded part.

4. Filter element according to claim 1 or 2,
**characterised in that**
the centring element (9) and/or the positioning web (14) are designed as separate components which are connected to the end disc (6).

5. Filter element according to any one of claims 1 to 4,
**characterised in that**
at least three, preferably four, six or more centring elements (9) are provided.

6. Filter element according to any one of claims 1 to 5,
**characterised in that**
an axially projecting connection piece (20) is arranged on the upper end disc (6), wherein at least the centring elements (9) extend into the connection piece (20).

7. Filter element according to claim 6,
**characterised in that**
the positioning web (14) extends into the connection piece (20).

8. Filter element according to any one of claims 1 to 7,
**characterised in that**
the positioning web (14) extends radially further inward than the centring elements (9).

9. Filter device (13), in particular an air filter, an oil filter or a fuel filter of a motor vehicle and/or an internal combustion engine,
- with a filter element (1) according to any one of claims 1 to 8,
- with a filter housing (12) and a riser pipe (11) arranged therein, which at an upper longitudinal end has a positioning contour (21), in particular in the form of a bevel, which interacts with the positioning web (14) of the filter element (1),
- wherein an inner diameter of the centring elements (9) corresponds essentially to an outer diameter of the riser pipe (11).

10. Filter device according to claim 9,
**characterised in that**
an axial groove (22) for receiving the positioning web (14) is arranged at the lowest point of the positioning contour (21).

## Revendications

1. Élément de filtre (1), en particulier un filtre à air, un filtre à huile ou un filtre à carburant d'un véhicule et/ou d'un moteur à combustion interne,
- avec un corps de filtre annulaire (2) constitué d'un matériau de filtration (3) qui entoure un espace intérieur cylindrique (4),
- avec un cadre intérieur (5) sur lequel le corps de filtre (2) est soutenu radialement à l'intérieur,
- avec un disque d'extrémité supérieur (6) qui est disposé axialement sur le corps de filtre (2) et présente une première ouverture de disque centrale (7),
- avec un disque d'extrémité inférieur (8) qui est disposé axialement sur le corps de filtre (2) et présente une seconde ouverture de disque centrale (7') et sur lequel est disposé une goupille dépassant en saillie axialement (15) pour fermer un canal de vidange (16),
**caractérisé en ce**
- **que** plusieurs éléments de centrage (9) répartis dans la direction périphérique autour de la première ouverture de disque (7) et dépassant en saillie axialement dans l'espace intérieur (4) sont prévus, qui présentent chacun une pente (10), dans laquelle une longueur axiale des éléments de centrage (9) est plus petite radialement à l'intérieur que radialement à l'extérieur,
- **qu'**une nervure de positionnement (14) est prévue, qui est disposée sur le disque d'extrémité supérieur (6) dans la direction périphérique entre deux éléments de centrage (9) et qui s'étend parallèlement à celui-ci.

2. Élément de filtre selon la revendication 1,
**caractérisé en ce**
**que** la nervure de positionnement (14) est conçue plus courte dans la direction axiale (17) que les éléments de centrage (9).

3. Élément de filtre selon la revendication 1 ou 2,
**caractérisé en ce**
**que** le disque d'extrémité (6) est conçu d'un seul tenant avec les éléments de centrage (9) et/ou la nervure de positionnement (14), en particulier en tant que pièce en plastique moulée par injection d'un seul tenant.

4. Élément de filtre selon la revendication 1 ou 2,
**caractérisé en ce**
**que** l'élément de centrage (9) et/ou la nervure de positionnement (14) sont conçus en tant que pièces séparées, lesquelles sont connectées au disque d'extrémité (6).

5. Élément de filtre selon l'une quelconque des revendications 1 à 4,
**caractérisé en ce**
**qu'**au moins trois, de préférence quatre, six ou plus, éléments de centrage (9) sont prévus.

6. Élément de filtre selon l'une quelconque des revendications 1 à 5,
**caractérisé en ce**
**qu'**une pièce de raccordement (20) dépassant en saillie axialement est disposée sur le disque d'extrémité supérieur (6), dans lequel au moins les éléments de centrage (9) s'étendent dans la pièce de raccordement (20).

7. Élément de filtre selon la revendication 6,
**caractérisé en ce**
**que** la nervure de positionnement (14) s'étend dans la pièce de raccordement (20).

8. Élément de filtre selon l'une quelconque des revendications 1 à 7,
**caractérisé en ce**
**que** la nervure de positionnement (14) s'étend radialement plus loin vers l'intérieur que les éléments de centrage (9).

9. Dispositif de filtre (13), en particulier un filtre à air, un filtre à huile ou un filtre à carburant d'un véhicule automobile et/ou d'un moteur à combustion interne,
- avec un élément de filtre (1) selon l'une quelconque des revendications 1 à 8,
- avec un boîtier de filtre (12) et un tube ascendant (11) disposé en son sein, qui présente à une extrémité longitudinale supérieure un contour de positionnement (21), en particulier en forme d'une pente, qui coopère avec la nervure de positionnement (14) de l'élément de filtre (1),
- dans lequel un diamètre intérieur des éléments de centrage (9) correspond sensiblement à un diamètre extérieur du tube ascendant (11).

10. Dispositif de filtre selon la revendication 9,
**caractérisé en ce**
**qu'**une rainure axiale (22) est disposée à un endroit le plus profond du contour de positionnement (21) pour recevoir la nervure de positionnement (14).
